# EUROPÄISCHE PATENTANMELDUNG

(11) **EP 1 156 464 A1**
(43) Veröffentlichungstag der Anmeldung: **21.11.2001**
(21) Anmeldenummer: 00110733.3
(22) Anmeldetag: 19.05.2000
(51) Int. Cl.: G09B 29/10, G06F 17/30

(54) **Verfahren zur Auswahl der geographischen Datensätze von Punkten die sich innerhalb eines vorgegebenen Abstandes zu einem Bezugspunkt befinden**

(71) Anmelder: Bauer, Christian, Dr., 53757 St. Augustin (DE)
(72) Erfinder: Bauer, Christian, Dr., 53757 St. Augustin (DE)
(74) Vertreter: Neumann, Ernst Dieter, Dipl.-Ing.

(57) **Zusammenfassung**

Verfahren zur Auswahl einer Teilmenge von Datensätzen (Auswahlmenge) aus einer Datenbank, insbesondere einer im Internet (world wide web) zugänglichen Datenbank, die eine Gesamtmenge von Datensätzen umfaßt, die jeweils Standortdaten umfassen, mittels eines Rechenprogramms, bei dem ein Datenbankbenutzer (User) einen Bezugsort vorgibt und in zumindest einem ersten Auswahlschritt als Auswahlmenge die Teilmenge von Datensätzen ermittelt wird, deren Standortdaten geographische Orte innerhalb eines Kreises mit einem bestimmten Radius um den Bezugsort bezeichnen.

## Beschreibung

Die Erfindung betrifft ein Verfahren zur Auswahl einer Teilmenge von Datensätzen (Auswahlmenge) aus einer Datenbank, insbesondere einer im Internet (world wide web) zugänglichen Datenbank, die eine Gesamtmenge von Datensätzen umfaßt, die jeweils Standortdaten umfassen. Bei den Datenbanken, bei denen das hier gegenständliche Verfahren zur Anwendung kommen soll, handelt es sich insbesondere um Verzeichnisse von Unternehmen, die nach Art von Branchenverzeichnissen aufgebaut sind, wobei unter den Unternehmensadressen die jeweilige Homepage des Unternehmens aufgerufen werden kann oder der E-commerce des jeweiligen Unternehmens bzw. das B2B-Geschäft des jeweiligen Unternehmens abgewickelt wird.

Die Datenbanken können auch als Marktplatz privater Anbieter mit wechselnden Datensätzen aufgebaut sein, die von einem Makler oder vom Anbieter selber eingegeben und wieder gelöscht werden können.

Die Datenbanken können auch private Adressen beinhalten und Verzeichnisse bestimmter Personengruppen bilden, die gemeinsamen Anschauungen anhängen und/oder gemeinsame Interessen haben und/oder gemeinsamen Tätigkeiten nachgehen.

Die Datenbanken dieser Art werden unter sogenannten Internetportals verwaltet und von Datenbankbetreibern aufgebaut, die in ersteren Fällen in der Regel kommerzielle Interessen mit der Aufnahme von Datensätzen verfolgen oder wie im letzteren Fall jedem bezüglich der Eingabe von Datensätzen freien Zugang gewähren.

Soweit der Datenbankbetreiber wirtschaftliche Interessen verfolgt, wird die Eingabe eines Datensatzes in die Datenbank gebührenpflichtig sein; hierbei würde sich der Datenbankbetreiber vorbehalten, bestimmte Formate vorzugeben und redaktionelle Bearbeitungen vornehmen zu dürfen.

Gleichfalls liegt es in der Hand des Datenbankbetreibers, dem Benutzer eine brauchbare und leichthandbare Benutzeroberfläche zur Verfügung zu stellen. Hierbei ist es allgemein üblich, die Benutzeroberfläche ausschließlich oder weitgehend menügeführt zu gestalten, d.h. sämtliche Auswahlschritte durch Anklicken zu ermögichen. Darüberhinaus ist es allgemein üblich, dem Benutzer die Wahl zwischen verschiedenen Sprachen in der Menüführung auf der Benutzeroberfläche zu ermöglichen. Insoweit handelt es sich bis hier um ganz gängige Verfahren.

Die Datenbanken können hierbei so strukturiert sein oder es können mehrere Datenbanken von einem Internetportal oder Datenbankbetreiber unter einer Benutzeroberfläche so angeboten werden, daß bestimmte Sachgebiete gesondert vorausgewählt werden können. Zum Beispiel wäre eine Untergliederung nach den Sachgebieten Gewerbe/Branchenindex- Anzeigenmarkt - Informationsdatenbanken möglich, wobei letztere wieder nach den Sachgebieten Nachrichten - Veranstaltungen/Freizeitangebote/Kultur- Behörden/öffentliche Einrichtungen - Krankenhäuser/Ärzte/Apotheken gegliedert sein können.

Neben einer Sachauswahl durch den Benutzer, die mit der Auswahl der Datenbank selber beginnt und innerhalb der Datenbank weiter spezifiziert werden kann, sei es durch Auswahl in vorgegebenen Menüs, sei es durch Eingabe von Freitextsuchbegriffen, ist häufig auch eine örtliche Auswahl durch den Benutzer angezeigt vor dem Hintergrund, daß die Datensätze für Unternehmen oder Personen stehen, denen eine Adresse zugeordnet ist. Bei weltweit aufgebauten Datenbanken wird der Benutzer häufig allein an Anbietern/Unter-nehmen aus dem eigenen Land interessiert sein, allein aus Gründen der Transportkosten, Kommunikationskosten, des Wegfalls von Zöllen und Steuern u.s.w. Bei national aufgebauten Datenbanken wird der Benutzer häufig nur an einer regionalen Auswahl inter-essiert sein, insbesondere immer dann, wenn das Betreiben des eigentlichen Geschäfts den persönlichen Kontakt erfordert. Übliche Auswahlkriterien für eine derartige örtliche Auswahl sind im erstgenannten Fall Ländernamen oder Länderkennungen, im zweitgenannten Fall Benennung des Bundeslandes oder der leitenden Ziffer der Postleitzahl oder der leitenden Ziffern der Telefonvorwahl.

Diese Auswahlkriterien sind in vielen Fällen nicht sonderlich sinnvoll, wenn beispielsweise die Disproportion der Größe zwischen den verschiedenen Bundesländern oder das Problem der fehlenden Grenzüberschreitung bei der Auswahl für Benutzer mit einem Standort in Grenznähe betrachtet werden.

Der vorliegenden Erfindung liegt die Aufgabe zugrunde, ein verbessertes Auswahlverfahren für die Benutzer einer Datenbank bereitzustellen, die aus einer Gesamtmenge von Datensätzen bestehen, die insbesondere Unternehmen, Personen oder Immobilien repräsentieren können und jeweils Standortdaten umfassen. Die Lösung hierfür besteht darin, daß der Datenbankbenutzer einen Bezugsort vorgibt und mittels eines Rechenprogramms in zumindest einem ersten Auswahlschritt als Auswahlmenge die Teilmenge von Datensätzen ermittelt wird, deren Standortdaten geographische Orte innerhalb eines Kreises mit einem bestimmten Radius um den Bezugsort bezeichnen. Auf diese Weise werden dem Benutzer in einem ersten Auswahlschritt die Datensätze angezeigt, die innerhalb einer bestimmten maximalen Entfernung vom vorgegebenen Bezugsort liegen, d.h. vom Bezugsort aus nährungsweise innerhalb einer bestimmten maximalen Zeit bzw. mit einer bestimmten maximalen Fallstrecke erreichbar sind.

In üblicher Weise wird dem Benutzer zunächst die Anzahl der Treffer angezeigt werden, so daß der Benutzer entscheiden kann, ob nachfolgende Auswahlschritte notwendig sind, in denen er den durch das System vorgegebenen oder bereits von ihm willkürlich gewählten Radius verändern müßte, um eine ihm größere oder geringere Anzahl von Treffern zu erzielen. Dem Benutzer wird es aber freistehen, jederzeit d.h. auch nach dem ersten Auwahlschritt sich die gesamten Datensätze der Auswahlmenge anzeigen zu lassen.

Nach der bevorzugten Verfahrensweise sind die Standortdaten als geographische Koordinaten in den Datensätzen abgelegt ebensowie der Bezugsort vom Benutzer in geographischen Koordinaten angegeben werden muß oder, sofern er in anderer Form eingegeben wird, in geographischen Koordinaten umgesetzt werden muß. Daraufhin kann aus den Differenzen der geographischen Koordinaten von Bezugsort und Standortdaten der Datensätze jeweils ein Entfernungswert berechnet werden und diser mit dem bestimmten Radius durch Differenzbildung verglichen werden. Je nach positiver oder negativer Differenz wird ein entsprechender Datensatz der Auswahlmenge zugeordnet oder nicht.

Andere Darstellungsweisen der Standortdaten und des Bezugsortes obensowie der daraus folgenden Auswahl sind möglich, beispielsweise indem die Standorte hinreichend kleinen Planquadraten zugeordnet werden und dem Bezugsort eine Auwahl von Planquadraten zugeordnet werden, die nährungsweise eine Kreisfläche bilden, d.h. innerhalb eines Kreises um den Bezugsort liegen oder zumindest noch geschnitten werden. Daraufhin ist ein einfacher Abgleich auf Identität zwischen den Standortdaten der Datensätze, d.h. dem jeweiligen Planquadrat mit der Menge der dem Bezugsort zugeordneten Planquadrate erforderlich.

Der Bezugsort kann vom Benutzer frei gewählt werden und in der Regel wird dies der Standort oder Wohnort des Benutzers sein. In gleicher Weise ist es jedoch auch möglich, daß dies ein von seinem Wohnort erntfernter Ort, beispielsweise der Zielort einer Reise oder ein zukünftiger Wohnort oder der Platz einer geplanten Geschäftsniederlassung ist. Andere Möglichkeiten sind nicht ausgeschlossen, dem Benutzer muß es freistehen, verschiedene Bezugsorte vorzugeben.

Es sollte für den Benutzer die Möglichkeit bestehen, ein oder mehrere Benutzerprofile mit den gewünschten Bezugsorten in einer entsprechenden weiteren Datenbank abzulegen und mittels eines Passwortes und/oder einer User-(i) bei weiteren Auswahlvorgängen wieder aufzurufen.

Da dem Benutzer in der Regel wieder die geographischen Koordinaten seines Wohnortes geschweige die anderer denkbarer Bezugsorte bekannt sein dürften, ist vorzusehen, daß er Bezugsorte auch durch die Adresse oder durch die Telefonnummer eines orstfesten Anschlusses benennen kann, wobei dann eine nachfolgende programmgesteuerte Zuordnung von Adressen zu den Telefonnummern bzw. von geographischen Koordinaten zu den Adressen erfolgt. Aus dem Umfeld der Telefonverzeichnisse bzw. der Navigationssysteme sind Datenbanken mit entsprechendem Inhalt und mit den entsprechenden Verwaltungsprogrammen bekannt, die eine derartige Zuordnung ermöglichen. Auf die gleichen Systeme kann bei der Anlage der Datensätze für die hier in Rede stehenden Datenbanken selber zurückgegriffen werden, sofern vorgesehen ist, daß diese dezentral und von ungeschulten Personen angelegt werden können.

Sofern die Datensätze umfangreich sind, beispielsweise dem B2B-Geschäft oder dem E-commerce dienen sollen und ohnehin eine umfangreiche redaktionelle Bearbeitung erforderlich ist, ist es sinnvoll, die Standortdaten unmittelbar in der benötigten Form einzugeben und auf die genannten Zuordnungsprogramme zu verzichten. Sofern die Datensätze aus dem Bereich des Anzeigenmarktes oder der Personenkontaktanzeigen stammen, muß die dezentrale Eingabemöglichkeit gegeben sein, wobei dann auf die genannten Zuordnungsprogramme zurückgegriffen werden muß.

Dem Benutzer muß es freibleiben, den ersten Auswahlschritt durch eine ergänzende Auswahl nach anderen Kriterien zu erweitern oder zu beschränken, hierbei kann beispielsweise eine Ergänzung um ein bestimmtes Stadtgebiet, auch soweit es über den Kreis um den Bezugsort hinausreicht, oder die Reduzierung um ein bestimmtes Ländergebiet, auch sofern es innerhalb des Kreises um den Bezugsort liegt, vorgesehen sein.

Bezüglich anderer Fortbildungen wird auf die Ansprüche Bezug genommen.

In bekannter Weise ist es möglich, bestimmte Daten innerhalb der Datensätze nur durch Schlüsselzahlen abzulegen. Die den Schlüsselzahlen zugeordnete Begriffe werden in einer besonderen Datenbank abgelegt und es werden zum Anzeigen auf der Benutzeroberfläche den Schlüssenzahlen die Begriffe zugeordnet und beim Einlesen über die Benutzeroberläche die Klartextbegriffe in Schlüssenzahlen umgesetzt. Hierbei ist es ohne weiteres möglich, die Schlüsselzahlen wahlweise in Begriffe verschiedener Sprachen umzusetzen. In prinzipiell gleicher Weise kann auch die Benutzeroberfläche organisiert werden, indem die Menüs ebenfalls mit Schlüsselzahlen operieren und je nach ausgewählter Benutzersprache die Begriffe in der gewählten Sprache auf der Benutzeroberfläche angezeigt werden. Systeme dieser Art sind in der Praxis weitverbreitet.

Das vorliegende Verfahren ist besonders geeignet, landesweit oder weltweit organisierte Datenbanken einem regional orientierten Benutzer in sinnvoller Weise zu erschließen.

## Patentansprüche

1. Verfahren zur Auswahl einer Teilmenge von Datensätzen (Auswahlmenge) aus einer Datenbank, insbesondere einer im Internet (world wide web) zugänglichen Datenbank, die eine Gesamtmenge von Datensätzen umfaßt, die jeweils Standortdaten umfassen, mittels eines Rechenprogramms, bei dem ein Datenbankbenutzer (User) einen Bezugsort vorgibt und in zumindest einem ersten Auswahlschritt als Auswahlmenge die Teilmenge von Datensätzen ermittelt wird, deren Standortdaten geographische Orte innerhalb eines Kreises mit einem bestimmten Radius um den Bezugsort bezeichnen.

2. Verfahren nach Anspruch 1,
**dadurch gekennzeichnet,**
**daß** aus den Differenzen der geographischen Koordinaten des Bezugsorts und der geographischen Koordinaten der Standortdaten der Datensätze jeweils ein Entfernungswert berechnet wird und dieser mit einem dem bestimmten Radius entsprechenden Entfernungswert durch Differenzbildung verglichen wird.

3. Verfahren nach Anspruch 1 oder 2,
**dadurch gekennzeichnet,**
**daß** ein bestimmter Radius vorgegeben und in einem Speicher abgelegt ist, auf den das Rechenprogramm zugreift.

4. Verfahren nach einem der Ansprüche 1 bis 3,
**dadurch gekennzeichnet,**
**daß** ein bestimmter Radius aus mehreren vorgegebenen, in einem Speicher abgelegten Radien vom Benutzer ausgewählt wird, auf den das Rechenprogramm dann zugreift.

5. Verfahren nach einem der Ansprüche 1 bis 4,
**dadurch gekennzeichnet,**
**daß** ein bestimmter Radius vom Benutzer frei ausgewählt wird, auf den das Rechenprogramm dann zugreift.

6. Verfahren nach einem der Ansprüche 1 bis 5,
**dadurch gekennzeichnet,**
**daß** die Standortdaten der Datensätze durch geographische Koordinaten wiedergegeben sind.

7. Verfahren nach einem der Ansprüche 1 bis 6,
**dadurch gekennzeichnet,**
**daß** der Benutzer den ausgewählten Bezugsort durch geographische Koordinaten wiedergibt.

8. Verfahren nach einem der Ansprüche 1 bis 7,
**dadurch gekennzeichnet,**
**daß** der Benutzer den Bezugsort durch die postalische Adresse benennt und aus einer zweiten Datenbank, die einen Thesaurus von postalischen Adressen und geographischen Koordinaten umfaßt, die Koordinaten des Bezugsortes ermittelt werden.

9. Verfahren nach einem der Ansprüche 1 bis 8,
**dadurch gekennzeichnet,**
**daß** der Benutzer den Bezugsort durch eine Telefonnummer benennt und aus einer dritten Datenbank, die einen Thesaurus aus Telefonnummern und Adressen umfaßt, zunächst die Adresse des Bezugsortes ermittelt wird.

10. Verfahren nach einem der Ansprüche 1 bis 9,
**dadurch gekennzeichnet,**
**daß** der Benutzer seinen Wohnort oder Standort als Bezugsort benennt.

11. Verfahren nach einem der Ansprüche 1 bis 10,
**dadurch gekennzeichnet,**
**daß** die Auswahlmenge um eine Zusatzmenge von Datensätzen aus der ersten Datenbank vermehrt wird, die nach anderen Auswahlkriterien ermittelt ist, als die Auswahlmenge, und
**daß** die Vereinigungsmenge aus Auswahlmenge und Zusatzmenge die Ergebnismenge bildet.

12. Verfahren nach einem der Ansprüche 1 bis 11,
**dadurch gekennzeichnet,**
**daß** die Auswahlmenge um eine Mindermenge von Datensätzen aus der ersten Datenbank reduziert wird, die nach anderen Auswahlkriterien ermittelt ist, als die Auswahlmenge, und
**daß** die Differenzmenge aus Auswahlmenge und Mindermenge die Ergebnismenge bildet.

13. Auf einem Datenträger abgelegte Datenbank, die eine Gesamtzahl von Datensätzen umfaßt, die jeweils Standortdaten umfassen, wobei die Standortdaten durch geographische Koordinaten wiedergegeben sind.

14. Rechenprogramm zur Durchführung eines Verfahrens nach einem der Ansprüche 1 bis 12 unter Verwendung einer Datenbank nach Anspruch 13.
